# EUROPÄISCHE PATENTSCHRIFT

(11) **EP 0 537 226 B1**
(45) Veröffentlichungstag und Bekanntmachung des Hinweises auf die Patenterteilung: **09.10.1996**
(21) Anmeldenummer: 91912096.4
(22) Anmeldetag: 21.06.1991
(51) Int. Cl.: C09D 201/06, C08F 299/00, C08F 4/00

(54) **LACKE UND VERWENDUNG DER LACKE ZUR LACKIERUNG VON AUTOMOBILKAROSSERIEN**
LAQUERS AND THEIR USE FOR LACQUERING CAR BODIES
LAQUES ET LEUR UTILISATION POUR LAQUER DES CARROSSERIES D'AUTOMOBILES

(30) Priorität: 03.07.1990 DE 4021126
(43) Veröffentlichungstag der Anmeldung: 21.04.1993
(73) Patentinhaber: BASF Lacke + Farben AG, 48165 Münster-Hiltrup (DE)
(72) Erfinder: KAPPES, Elisabeth, D-6800 Mannheim 1 (DE); POTH, Ulrich, D-4400 Münster (DE)
(74) Vertreter: Münch, Volker, Dr.
(86) Internationale Anmeldenummer: EP9101151
(87) Internationale Veröffentlichungsnummer: WO9201025

(56) Entgegenhaltungen:
- EP-A- 0 342 815
- DE-A- 3 843 323

## Beschreibung

Die Erfindung betrifft Lacke, enthaltend
(i) ein Kunstharz (A), das Hydroxylgruppen und α,β-ungesättigte Carbonylgruppen enthält oder eine Mischung aus solchen Kunstharzen und/oder
(ii) eine Mischung aus
   a) einem hydroxylgruppenhaltigen Kunstharz (B) oder einer Mischung aus solchen Kunstharzen und
   b) einem Vernetzungsmittel (C), das α,β -ungesättigte Carbonylgruppen enthält oder einer Mischung aus solchen Vernetzungsmitteln und
(iii) einen Katalysator (D), der die Reaktion von Hydroxylgruppen mit α,β-ungesättigten Carbonylgruppen katalysiert oder eine Mischung aus solchen Katalysatoren.

Die Erfindung betrifft auch die Verwendung dieser Lacke zur Lackierung von Automobilkarosserien.

Lacke der oben beschriebenen Art sind bekannt (vgl.

DE-OS-38 43 323 und Farbe + Lack, 95 (1989) Seite 71). Sie vernetzen durch Addition von Hydroxylgruppen an aktivierte Kohlenstoff-Doppelbindungen. Gemäß der DE-OS-38 43 323 und des Artikels in Farbe + Lack wird die Addition der Hydroxylgruppen an aktivierte Kohlenstoff-Doppelbindungen durch basische Katalysatoren katalysiert.

Die der vorliegenden Erfindung zugrundeliegende Aufgabenstellung besteht in der Bereitstellung von neuen, gegenüber dem Stand der Technik verbesserten Lacken der oben beschriebenen Art. Die neuen Lacke sollen insbesondere vernetzte Lackfilme liefern, die auch bei Anwendung energiesparender Einbrennbedingungen (niedrige Einbrenntemperaturen und/oder kurze Einbrennzeiten) gute Lösemittelbeständigkeit und gute Wasserfestigkeit zeigen.

Diese Aufgabe wird überraschenderweise durch Bereitstellung von Lacken der oben beschriebenen Art gelöst, die dadurch gekennzeichnet sind, daß sie als Katalysator (D) eine Brönstedsäure oder eine Mischung aus Brönstedsäuren enthalten.

Die erfindungsgemäßen Lacke zeichnen sich gegenüber Lacken, die in Gegenwart von basischen Katalysatoren gehärtet werden, dadurch aus, daß sie bei vergleichbaren Einbrennzeiten schon bei Anwendung tieferer Einbrenntemperaturen vernetzte Lackfilme liefern, die gute Lösemittelbeständigkeit und gute Wasserfestigkeit zeigen. Erstaunlicherweise können die vorteilhaften Lackeigenschaften mit - im Vergleich zu Lacken mit basischen Katalysatoren - geringeren Katalysatoreinsatzmengen erreicht werden. Ein weiterer Vorteil der erfindungsgemäßen Lacke besteht darin, daß sie zusätzlich zu dem α,β-ungesättigte Carbonylgruppen enthaltenden Vernetzungsmittel (C) auch noch Aminoplastharze, die unter Säurekatalyse mit Hydroxylgruppen aufweisenden Kunstharzen vernetzen können, als Vernetzungsmittel enthalten können.

Die erfindungsgemäßen Lacke können sowohl auf Basis organischer Lösemittel als auch wäßrig sein.

Als Kunstharze (A) können im Prinzip alle Kunstharze, die sowohl Hydroxylgruppen als auch α,β-ungesättigte Carbonylgruppen enthalten und die als Bindemittel in Lacken verwendet werden können, eingesetzt werden. Als Beispiele werden sowohl Hydroxylgruppen als auch α,β-ungesättigte Carbonylgruppen enthaltende Polyacrylat-, Polyester-, Alkyd-, Urethan-, Polyether-, und Epoxidharze genannt. Die Kunstharze können nach bekannten Verfahren hergestellt werden. Wasserverdünnbare Kunsharze können durch Einbau von solubilisierenden Gruppen (z.B. Carboxylatgruppen) in die Kunstharzmoleküle hergestellt werden. Das zahlenmittlere Molekulargewicht der Kunstharze sollte zweckmäßigerweise zwischen 250 und 100000, vorzugsweise zwischen 500 und 20000 liegen, der Gehalt an α,β-ungesättigten Carbonylgruppen sollte zwischen 0,01 und 20, vorzugsweise zwischen 0,1 und 5 Mol pro kg Kunstharz liegen und der Gehalt an Hydroxylgruppen sollte zwischen 0,01 und 50 Mol, vorzugsweise zwischen 0,1 und 10 Mol pro kg Kunstharz liegen.

α,β-ungesättigte Carbonylgruppen weisen die Formel 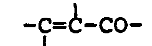 auf und können z.B. Acryloyl-, Methacryloyl-, Itaconoyl-, Maleoyl-, Fumaroyl, Crotonoyl-, Cinnamoyl-, Acrylamido- oder Methacrylamidogruppen sein. Die Hydroxylgruppen sollten vorzugsweise primäre Hydroxylgruppen sein.

Als Kunstharz (A) wird vorzugsweise ein Umsetzungsprodukt aus 1 Mol N-Methylolacrylamid oder 1 Mol N-Methylolmethacrylamid, 1 Mol eines Diisocyanats und einem hydroxylgruppenhaltigen Kunstharz eingesetzt. Derartige Kunstharze sowie die Herstellung dieser Kunstharze werden in der DE-OS-38 43 323 beschrieben.

Als hydroxylgruppenhaltige Kunstharze (B) können im Prinzip alle zur Herstellung von Lacken geeigneten hydroxylgruppenhaltigen Kunstharze, die im statistischen Mittel mindestens zwei Hydroxylgruppen pro Kunstharzmolekül enthalten, eingesetzt werden. Als Beispiele werden hydroxylgruppenhaltige Polyacrylat-, Polyester-, Alkyd-, Urethan-, Polyether- und Epoxidharze genannt.

Die Kunstharze können nach bekannten Verfahren hergestellt werden. Wasserverdünnbare Kunstharze können durch Einbau von solubilisierenden Gruppen (z.B. Carboxylatgruppen) in die Kunstharzmoleküle hergestellt werden. Das zahlenmittlere Molekulargewicht der Kunstharze sollte zweckmäßigerweise zwischen 250 und 100000, vorzugsweise zwischen 500 und 20000 liegen und der Gehalt an Hydroxylgruppen sollte zwischen 0,01 und 50 Mol, vorzugsweise zwischen 0,1 und 10 Mol, besonders bevorzugt zwischen 0,9 und 3,6 Mol pro kg Kunstharz liegen. Es sollten vorzugsweise primäre Hydroxylgruppen enthaltende Kunstharze als Kunstharz (B) eingesetzt werden.

Als Kunstharze (B) werden vorzugsweise die in der DE-OS-29 38 308 beschriebenen hydroxylgruppenhaltigen Polyacrylatharze eingesetzt. Als Kunstharze (B) werden besonders bevorzugt Polyacrylatharze mit einpolymerisiertem 4-Hydroxy-n-Butylacrylat und/oder einpolyme isiertem 4-Hydroxy-n-Butylmethacrylat eingesetzt. Diese Kunstharze und ihre Herstellung werden in der DE-OS 29 38 308 beschrieben. Die in Rede stehenden bevorzugt und besonders bevorzugt eingesetzten Polyacrylatharze sollten eine OH-Zahl von 50 bis 200, vorzugsweise 100 - 200, eine Säurezahl von 0 bis 80, vorzugsweise 15 bis 40, ein zahlenmittleres Molekulargewicht von 1000 bis 30000, vorzugsweise 2000 bis 10000 und eine Glasübergangstemperatur im Bereich zwischen 250 und 370°K aufweisen.

Wenn die als Komponente (B) eingesetzten hydroxylgruppenhaltigen Kunstharze neben den Hydroxylgruppen auch noch Carboxylgruppen enthalten, kann in vielen Fällen die Einsatzmenge des Katalysators (D) verringert werden.

Als Vernetzungsmittel (C) kann im Prinzip jede organische Verbindung bzw. jedes Kunstharz eingesetzt werden, die bzw. das im statistischen Mittel mindestens zwei α,β-ungesättigte Carbonylgruppen im Molekül enthält. Bevorzugt werden Vernetzungsmittel eingesetzt, die im statistischen Mittel mindestens zwei
CH₂ = CH - CO-Gruppen pro Molekül enthalten.

α,β-ungeättigte Carbonylygruppen weisen die Formel 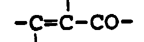 auf und können z.B. Acryloyl-, Methacryloyl-, Itaconoyl-, Maleoyl-, Fumaroyl-, Crotonoyl-,Cinnamoyl-, Acrylamido- oder Methacrylamidogruppen sein.

Als Vernetzungsmittel (C) können beispielsweise α,β-ungesättigte Carbonylgruppen enthaltende Polyacrylat-, Polyester-, Alkyd-, Urethan-, Polyether- und Epoxidharze eingesetzt werden. Die Kunstharze können nach bekannten Verfahren hergestellt werden. Wasserverdünnbare Kunstharze können durch Einbau von solubilisierenden Gruppen (z.B. Carboxylatgruppen) in die Kunstharzmoleküle hergestellt werden. Das zahlenmittlere Molekulargewicht der Kunstharze sollte zweckmäßigerweise zwischen 170 und 100000, vorzugsweise zwischen 170 und 20000 liegen, der Gehalt an α,β-ungesättigten Carbonylgruppen sollte zwischen 0,01 und 20, vorzugsweise zwischen 0,1 und 12 Mol pro kg Kunstharz liegen.

Als Vernetzungsmittel (C) kann beispielsweise ein Umsetzungsprodukt aus 1 Mol N-Methylolacrylamid oder 1 Mol N-Methylolmethacrylamid, 1 Mol eines Diisocyanats und einem hydroxylgruppenhaltigen Kunstharz eingesetzt werden.

Derartige Kunstharze sowie die Herstellung dieser Kunstharze werden in der DE-OS-38 43 323 beschrieben.

Als Vernetzungsmittel (C) werden vorzugsweise relativ niedermolekulare (zahlenmittleres Molekulargewicht bis etwa 2000, vorzugsweise bis etwa 1000) Di- und Polyacrylate, wie z.B. Ethylenglykoldiacrylat, Butandioldiacrylat, Trimethylolpropandiacrylat, Trimethylolpropantriacrylat, Pentaerythritdiacryalat, Pentaerythrittriacrylat, mit Acrylsäure verestertes alkoxiliertes Glycerin, 1,12 Dodecyldiacrylat, urethangruppenhaltige Polyacrylate, wie z.B. Umsetzungsprodukte aus Toluylendiisocyanat, Acrylsäure und Pentaerythrit und Umsetzungsprodukte aus Isophorondiisocyanat, Acrylsäure und Pentaerythrit. Es können auch die entsprechenden Methacrylate eingesetzt werden. Die bevorzugt eingesetzten Vernetzungsmittel (C) enthalten zweckmäßigerweise im statistischen Mittel 2 bis 6 Acrylatstrukturen pro Molekül. Die Verwendung der relativ niedermolekularen Vernetzungsmittel ermöglicht die Formulierung von Lacken mit hohen Feststoffgehalten.

In manchen Fällen ist es vorteilhaft, zusätzlich zum Vernetzungsmittel (C) auch noch ein unter Säurekatalyse reaktives Aminoplastharz oder eine Mischung solcher Aminoplastharze einzusetzen. Als Aminoplastharze werden vorzugsweise veretherte Melaminharze eingesetzt. Derartige Harze sind im Handel erhältlich (z.B. ®Cymel 303 und ®Cymel 301, Handelsprodukte der Dyno Cyanamid sowie ®Maprenal MF 900, Handelsprodukt der Hoechst AG).

Die Komponenten a) und b) werden üblicherweise in Gewichtsverhältnissen von 99,99 : 0,01 bis 50 : 50, vorzugsweise 99,9 : 0,1 bis 70 : 30 gemischt.

Die erfindungsgemäßen Lacke enthalten als Katalysator (D) eine Brönstedsäure oder eine Mischung aus Brönstedsäuren.

Unter Brönstedsäuren werden Substanzen verstanden, die in Wasser Protonen abgeben können.

Der bei 25°C gemessene pKs-Wert der ersten Dissoziationsstufe der eingesetzten Brönstedsäuren sollte vorzugsweise unter 1,0, besonders bevorzugt unter -2,0 liegen (zur Definition des pKs-Wertes vgl. z.B. Organikum, VEB Deutscher Verlag der Wissenschaften, Berlin 1974, Seite 150 f).

Als Beispiele für einsetzbare Brönstedsäuren werden genannt: Sulfonsäuren, wie z.B. p-Toluolsulfonsäure, Dodecylbenzolsulfonsäure, Naphthalinsulfonsäure, Dinonylnaphthalindisulfonsäure und Benzolsulfonsäure. Besonders bevorzugt werden p-Toluolsulfonsäure und Dodecylbenzolsulfonsäure als Katalysator (D) eingesetzt.

Von der Komponente (D) sollten zweckmäßigerweise 0,001 bis 20 Gewichtsteile, vorzugsweise 0,001 bis 10 Gewichtsteile, besonders bevorzugt 0,05 bis 2 Gewichtsteile, bezogen auf 100 Gewichtsteile der Komponente (i) und/oder (ii) eingesetzt werden.

Die erfindungsgemäßen Lacke können neben den Komponenten (i) und/oder (ii) und (iii) selbstverständlich noch weitere für Lacke übliche Inhaltsstoffe, wie z.B. organische Lösemittel, Pigmente, Füllstoffe, Rheologiehilfsmittel, Antischaummittel usw. enthalten.

Unter Verwendung der Komponenten (i) und/oder (ii) und (iii) kann der Fachmann Lacke zum Beschichten von Holz, Metall, Kunststoff, Glas usw. formulieren.

Der Fachmann kann unter Verwendung der Komponenten (i) und/oder (ii) und (iii) insbesondere Füller, Steinschlagzwischengründe, metallpigmenthaltige, insbesondere aluminiumpigmenthaltige Metalleffektlacke (sowohl für Einschichtlackierungen als auch für Zweischichtlackierungen des basecoat/clearcoat-Typs), Unilacke und Klarlacke für die Fahrzeuglackierung, insbesondere für die Automobillackierung formulieren. Diese Lacke können sowohl bei der Serien- als auch bei der Reparaturlackierung zum Einsatz kommen.

Die Erfindung wird in den folgenden Beispielen näher erläutert. Alle Angaben über Teile und Prozentsätze sind Gewichtsangaben, falls nicht ausdrücklich etwas anderes festgestellt wird.

### 1. Herstellung hydrozylgruppenhaltiger Kunstharze (B)

### 1.1 Kunstharz I

In einem 4 1 Reaktionskessel aus Edelstahl mit Rührer, Rückflußkühler, Monomer- und Initiatorzulauf werden 351 g Shellsol A (Aromatisches Lösemittel mit einem Siedebereich von 165-185°C) und 117 g Butylacetat auf 140°C aufgeheizt. Zu dieser Lösemittelmischung werden innerhalb von 3 Stunden gleichzeitig eine Mischung aus 180 g Methylmethacrylat, 180 g Butylmethacrylat, 240 g Styrol, 360 g 4-Hydroxy-n-Butylacrylat und 4,2 g Mercaptoethanol und eine Lösung von 25,2 g Di-tert-Butylperoxid in einer Mischung aus 54 g Shellsol A und 18 g Butylacetat gleichmäßig zugegeben. Die Reaktionstemperatur wird auf 140°C gehalten. Nach Beendigung der Zugabe der Monomerenmischung und Initiatorlösung wird noch 3 Stunden nachpolymerisiert. Die so erhaltene Polyacrylatharzlösung weist einen Feststoffgehalt von 65 Gew.-% und eine Viskosität von 4,1 dPas (50 %ig in Butylacetat) auf. Das Polyacrylatharz weist eine Hydroxylzahl von 140, ein zahlenmittleres Molekulargewicht von 6000 und eine Glasübergangstemperatur von 278° K auf.

### 1.2 Kunstharz II

In einem 4 l Reaktionskessel aus Edelstahl mit Rührer, Rückflußkühler, Monomer- und Initiatorzulauf werden 663,4 g Shellsol A (aromatisches Lösemittel mit einem Siedebereich von 165 - 185°C) und 221,1 g Butylacetat auf 140°C aufgeheizt. Zu dieser Lösemittelmischung werden innerhalb von 3 Stunden gleichzeitig eine Mischung aus 342 g Methylmethacrylat, 342 g Cyclohexylmethacrylat, 456 g Styrol und 684 g 4-Hydroxy-n-Butylacrylat und eine Lösung von 47,9 g Di-tert-Butylperoxid in einer Mischung aus 102,6 g Shellsol A und 34,2 g Butylacetat gleichmäßig zugegeben. Die Reaktionstemperatur wird auf 140°C gehalten. Nach Beendigung der Zugabe der Monomerenmischung und Initiatorlösung wird noch 3 Stunden nachpolymerisiert. Die so erhaltene Polyacrylatharzlösung weist einen Feststoffgehalt von 65 Gew.-% und eine Viskosität von 6,4 dPas (50 %ig in Butylacetat) auf. Das Polyacrylatharz weist eine Hydroxylzahl von 140, ein zahlenmittleres Molekulargewicht von 6000 und eine Glasübergangstemperatur von 283° K auf.

### 1.3 Kunstharz III

In einem 4 l Reaktionskessel aus Edelstahl mit Rührer, Rückflußkühler, Monomer- und Initiatorzulauf werden 663,4 g Shellsol A (aromatisches Lösemittel mit einem Siedebereich von 165 - 185°C) und 221,1 g Butylacetat auf 140°C aufgeheizt. Zu dieser Lösemittelmischung werden innerhalb von 3 Stunden gleichzeitig eine Mischung aus 296,4 g Methylmethacrylat, 342,0 g Cyclohexylmethacrylat, 456 g Styrol, 684 g 4-Hydroxy-n-Butylacrylat und 45,6 g Acrylsäure und eine Lösung von 47,9 g Di-tert.-Butylperoxid in einer Mischung aus 102,6 g Shellsol A und 34,2 g Butylacetat gleichmäßig zugegeben. Die Reaktionstemperatur wird auf 140°C gehalten. Nach Beendigung der Zugabe der Monomerenmischung und Initiatorlösung wird noch 3 Stunden nachpolymerisiert. Die so erhaltene Polyacrylatharzlösung weist einen Feststoffgehalt von 65 Gew.-% und eine Viskosität von 16,5 dPas (50 %ig in Butylacetat) auf. Das Polyacrylatharz weist eine Säurezahl von 21, eine Hydroxylzahl von 140, ein zahlenmittleres Molekulargewicht von 6000 und eine Glasübergangstemperatur von 283° K auf.

### 2. Vernetzungsmittel (C)

### 2.1 Vernetzungsmittel I

OTA 480, Handelsprodukt der UCB-Chemie GmbH; mit Acrylsäure verestertes propoxiliertes Glycerin (34,5 Mol-% Acrylsäure, 17,5 Mol-% Glycerin und 48,0 Mol-% Propandiol, enthält im statistischen Mittel 3 Doppelbindungen pro Molekül; Doppelbindungsäquivalentgewicht: 160, zahlenmittleres Molekulargewicht: 480).

### 2.2 Vernetzungsmittel II

MONIGOMER PPTTA, Handelsprodukt der Hans Rahm & Co., Zürich; alkoxylierter tetrafunktioneller Acrylsäureester (Pentaerythritacrylsäureester, Doppelbindungsäquivalentgewicht: 145).

### 2.3 Vernetzungsmittel III

EBECRYL 220, Handelsprodukt der UCB-Chemie GmbH; hexafunktionelles aromatisches Urethanacrylat (Umsetzungsprodukt aus Toluylendiisocyanat, Acrylsäure und Pentaerythrit, Doppelbindungsäquivalentgewicht: 167, mittleres Molekulargewicht: 1000).

### 2.4 Vernetzungsmittel IV

EBECRYL 1290, Handelsprodukt der UCB-Chemie GmbH; hexafunktionelles aliphatisches Urethanacrylat (Umsetzungsprodukt aus Isophorondiisocyanat, Acrylsäure und Pentaerythrit Doppelbindungsäquivalentgewicht: 167, mittleres Molekulargewicht: 1000).

### 3. Herstellung erfindungsgemäßer Lacke

Durch Mischen der in der folgenden Tabelle 1 aufgeführten Bestandteile in den in der Tabelle angegebenen Mengen (in Gewichtsteilen) wurden erfindungsgemäße Lacke hergestellt.

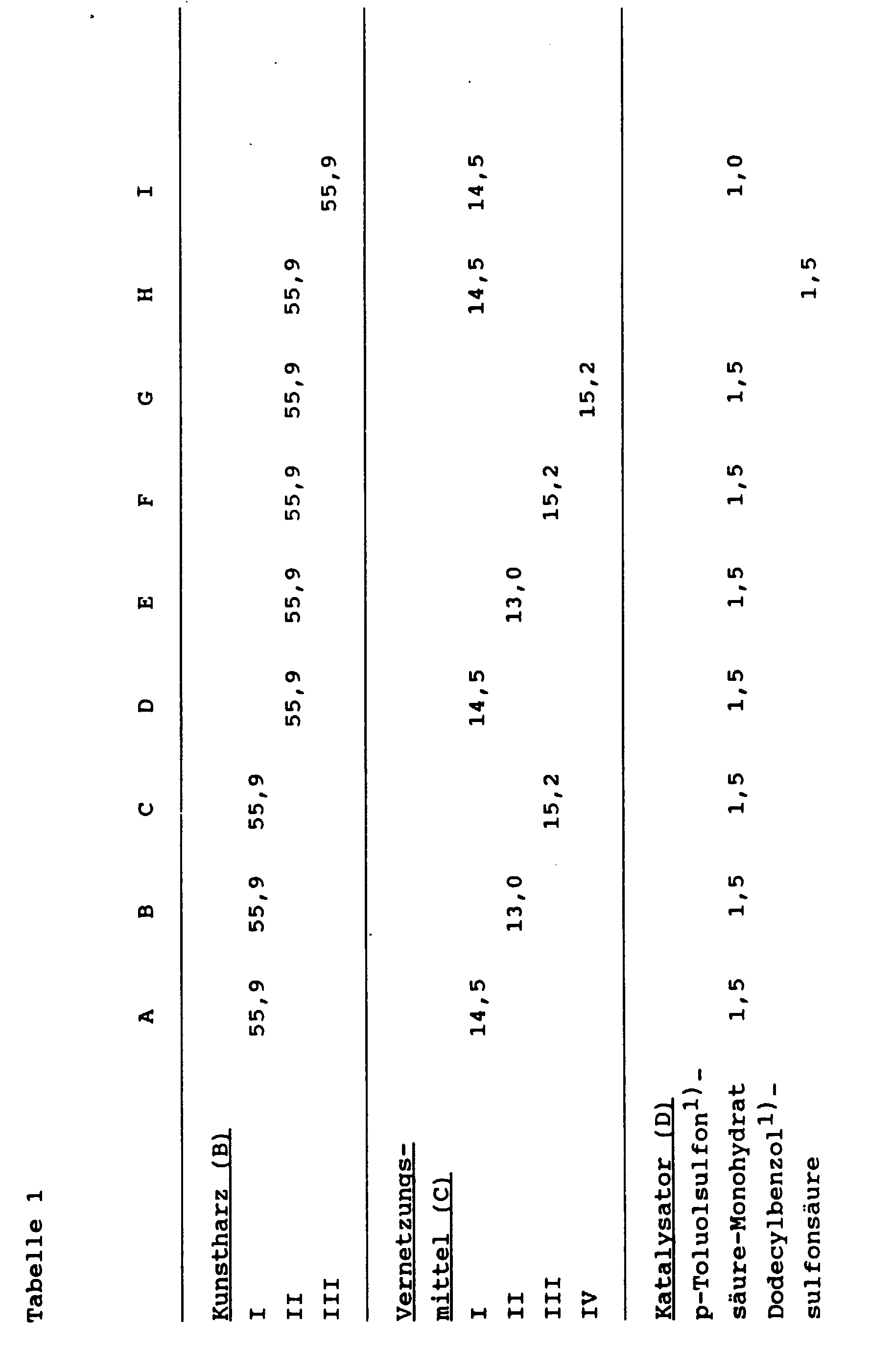

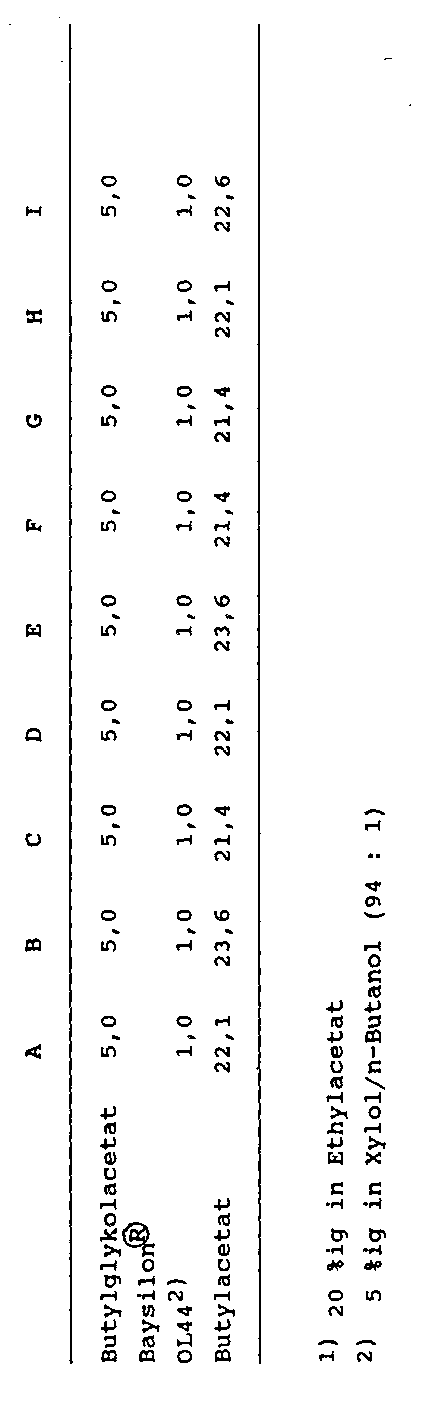

### 4. Herstellung von Lacken unter Verwendung von basischen Katalysatoren (Vergleichsbeispiele)

Die Lacke wurden durch Mischen der in der folgenden Tabelle 2 aufgeführten Betandteile in den in der Tabelle angegebenen Mengen (in Gewichtsteilen) hergestellt.

**Tabelle 2**

| | J | K | L | M |
|---|---|---|---|---|
| Kunstharz (B) | | | | |
| | | | | |
| I | 55,9 | | | |
| II | | 55,9 | 55,9 | 55,9 |
| Vernetzungsmittel (C) | | | | |
| I | 14,5 | | | |
| II | | 13,0 | 13,0 | 13,0 |
| Katalysator (D) | | | | |
| DBN¹⁾ | | | 1,0 | |
| Triton B²⁾ | | 0,9 | | |
| Tetramethylguanidin | | | | 1,0 |
| Na-Dodecylphenolat³⁾ | 2,0 | | | |
| Butylglykolacetat | 5,0 | 5,0 | 5,0 | 5,0 |
| Baysilon®OL 44⁴⁾ | 1,0 | 1,0 | 1,0 | 1,0 |
| Butylacetat | 21,6 | 24,2 | 24,1 | 24,1 |

| | | | | |
|---|---|---|---|---|
| ¹⁾ Diazabicyclo[4.3.0]non-5-en | | | | |
| ²⁾ Benzyltrimethylammoniumhyroxid, 35 %ig in Methanol | | | | |
| ³⁾ 50 %ig in Xylol | | | | |
| ⁴⁾ 5 %ig in Xylol/n-Butanol (94 : 1) | | | | |

### 5. Applikation der Lacke und Prüfung der erhaltenen Lackfilme

Die gemäß Pkt. 3 und Pkt. 4 hergestellten Lacke werden mit einer Naßfilmstärke von 150 µm auf Glasplatten appliziert. Die mit den Lacken gemäß Pkt. 3 hergestellten Naßfilme werden 30 min. bei 140° C und die mit den Lacken gemäß Pkt. 4 hergestellten Naßfilme werden 45 min. bei 140°C eingebrannt. Die so erhaltenen Lackfilme werden mit Methylethylketon (MEK) auf ihre Lösemittelbeständigkeit geprüft und dem Wassertropfentest unterzogen. Die Ergebnisse sind in der folgenden Tabelle 3 zusammengefaßt.

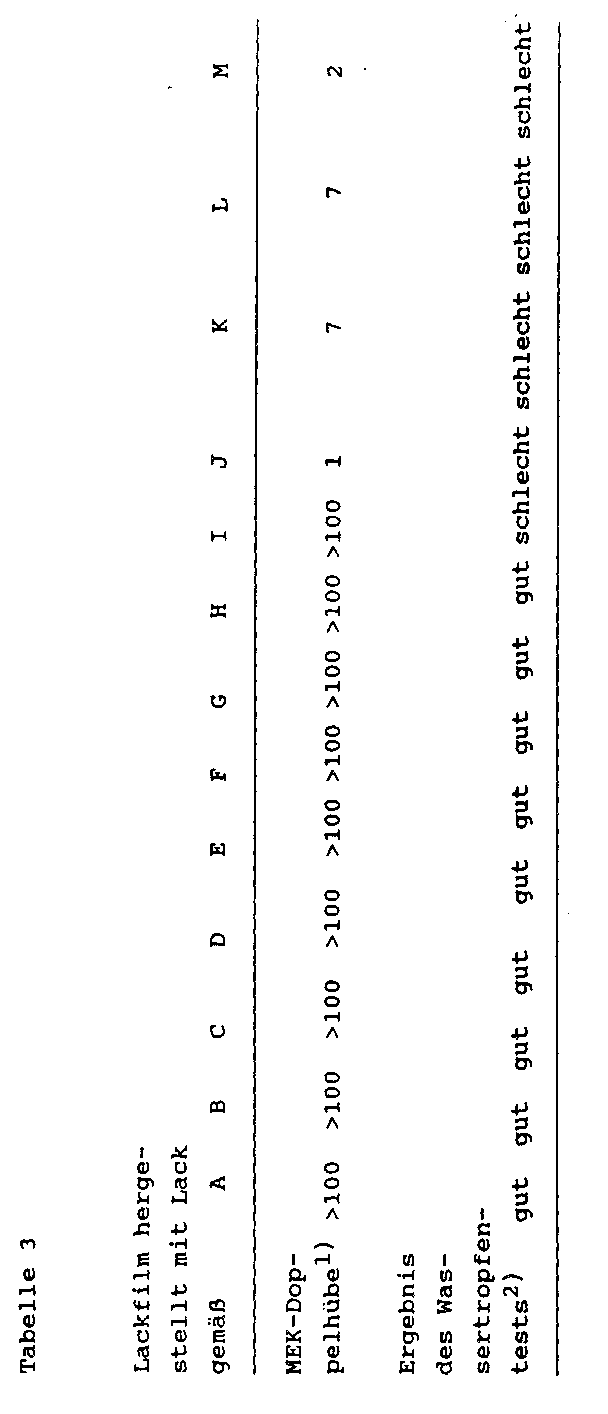

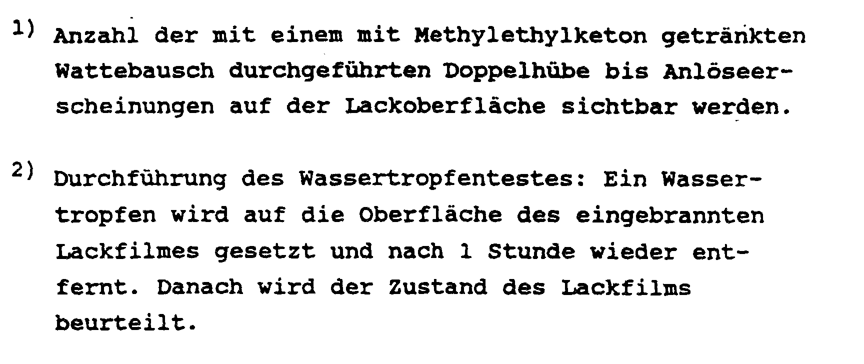

## Patentansprüche

1. Lacke, enthaltend
(i) ein Kunstharz (A), das Hydroxylgruppen und alpha,beta-ungesättigte Carbonylgruppen enthält, ausgewählt aus der Gruppe der Polyacrylat-,Polyester-, Alkyd-, Urethan-, Polyether- und Epoxidharze, wobei der Gehalt an Hydroxylgruppen zwischen 0,01 und 50 Mol und der Gehalt an alpha,beta-ungesättigten Carbonylgruppen zwischen 0,01 und 20 Mol pro kg Kunstharz liegt oder eine Mischung aus solchen Kunstharzen und/oder
(ii) eine Mischung aus
(a) einem hydroxylgruppenhaltigem Kunstharz, ausgewählt aus der Gruppe der hydroxylgruppenhaltigen Polyacrylat-, Polyester-, Alkyd-, Urethan-, Polyether- und Epoxidharze, mit einem Hydroxylgruppengehalt zwischen 0,01 und 50 Mol pro kg Kunstharz oder einer Mischung aus solchen Kunstharzen und
(b) einem Vernetzungsmittel (C), das im statistischen Mittel mindestens zwei alpha,beta-ungesättigte Carbonylgruppen im Molekül enthält oder einer Mischung aus solchen Vernetzungsmitteln, wobei die Komponenten a) und b) in einem Gewichtsverhältnis von 99,99:0,01 bis 50:50 vorliegen und
(iii) einen Katalysator (D), die die Reaktion von Hydroxylgruppen mit alpha,beta-ungesättigten Carbonylgruppen katalysiert oder eine Mischung aus solchen Katalysatoren,
dadurch gekennzeichnet, daß der Katalysator (D) eine Sulfonsäure ist, deren bei 25 Grad C gemessener pKs-Wert der ersten Dissoziationsstufe unter 1,0 liegt.

2. Lacke nach Anspruch 1, dadurch gekennzeichnet, daß das Kunstharz (B) ein hydroxylgruppenhaltiges Polyacrylatharz ist.

3. Lacke nach Anspruch 1 oder 2, dadurch gekennzeichnet, daß das Vernetzungsmittel (C) im statistischen Mittel mindestens zwei CH₂ = CH-CO- Gruppen pro Molekül enthält.

4. Lacke nach einem der Ansprüche 1 bis 3, dadurch gekennzeichnet, daß sie neben dem Vernetzungsmittel (C) noch ein Aminoplastharz oder eine Mischung aus Aminoplastharzen als Vernetzungsmittel enthalten.

5. Lacke nach einem der Ansprüche 1 bis 4, dadurch gekennzeichnet, daß der bei 25 Grad C gemessene pKs-Wert der ersten Dissoziationsstufe der als Katalysator (D)eingesetzten Sulfonsäure unter -2,0 liegt.

6. Lacke nach einem der Ansprüche 1 bis 5, dadurch gekennzeichnet, daß sie als Katalysator (D) p-Toluolsulfonsäure enthalten.

7. Lacke nach einem der Ansprüche 1 bis 5, dadurch gekennzeichnet, daß sie als Katalysator (D) Dodecylbenzolsulfonsäure enthalten.

8. Verwendung der Lacke nach einem der Ansprüche 1 bis 8 zur Lackierung von Automobilkarosserien.

## Claims

1. Paints comprising
(i) a resin (A) which contains hydroxyl groups and alpha,beta-unsaturated carbonyl groups, selected from the group of the polyacrylate, polyester, alkyd, urethane, polyether and epoxy resins, the content of hydroxyl groups being between 0.01 and 50 mol and the content of alpha,beta-unsaturated carbonyl groups being between 0.01 and 20 mol per kg of resin, or a mixture of such resins, and/or
(ii) a mixture consisting of
a) a hydroxyl-containing resin (B) selected from the group of the hydroxyl-containing polyacrylate, polyester, alkyd, urethane, polyether and epoxy resins, having a hydroxyl content of between 0.01 and 50 mol per kg of resin, or a mixture of such resins, and
b) a crosslinking agent (C) which contains on statistical average at least two alpha,beta-unsaturated carbonyl groups in the molecule, or a mixture of such crosslinking agents, the components a) and b) being in a weight ratio of 99.99:0.01 to 50:50, and
(iii) a catalyst (D) which catalyses the reaction of hydroxyl groups with alpha,beta-unsaturated carbonyl groups, or a mixture of such catalysts,
characterised in that the catalyst (D) is a sulphonic acid whose pKa value of the first dissociation state, measured at 25 degrees C, is below 1.0.

2. Paints according to Claim 1, characterised in that the resin (B) is a hydroxyl-containing polyacrylate resin.

3. Paints according to Claim 1 or 2, characterised in that the crosslinking agent (C) contains on statistical average at least two CH₂ = CH-CO groups per molecule.

4. Paints according to one of Claims 1 to 3, characterised in that they contain, in addition to the crosslinking agent (C), an amino resin or a mixture of amino resins as crosslinking agents.

5. Paints according to one of Claims 1 to 4, characterised in that the pKa value of the first dissociation state of the sulphonic acid used as the catalyst (D), measured at 25 degrees C, is below -2.0.

6. Paints according to one of Claims 1 to 5, characterised in that they contain p-toluenesulphonic acid as the catalyst (D).

7. Paints according to one of Claims 1 to 5, characterised in that they contain dodecylbenzenesulphonic acid as catalyst (D).

8. Use of the paint is according to one of Claims 1 to 8 [sic] for the finishing of car bodies.

## Revendications

1. Laques contenant
(i) une résine synthétique (A), qui contient des groupements hydroxyles et des groupements carbonyles insaturés en alpha,bêta, choisie parmi le groupe des résines de polyacrylate, de polyester, d'alkyd, d'uréthane, de polyéther et d'époxyde, la teneur en groupements hydroxyles se situant entre 0,01 et 50 moles, et la teneur en groupements carbonyles insaturés en alpha,bêta se situant entre 0,01 et 20 moles par kg de résine synthétique, ou un mélange de résines synthétiques de ce genre et/ou
(ii) un mélange
(a) d'une résine synthétique contenant des groupements hydroxyles, choisie Parmi le groupe des résines de polyacrylate, de polyester, d'alkyd, d'uréthane, de polyéther et d'époxyde contenant des groupements hydroxyles, ayant une teneur en groupements hydroxyles comprise entre 0,01 et 50 moles par kg de résine synthétique, ou d'un mélange de résines synthétiques de ce genre et
(b) d'un agent de réticulation (C), qui contient en moyenne statistique au moins deux groupements carbonyles insaturés en alpha,bêta dans la molécule, ou d'un mélange d'agents de réticulation de ce genre, les composants a) et b) étant présents dans un rapport en poids de 99,99:0,01 à 50:50 et
(iii) un catalyseur (D), qui catalyse la réaction des groupements hydroxyles avec les groupements carbonyles insaturés en alpha,bêta, ou un mélange de catalyseurs de ce genre,
caractérisées en ce que le catalyseur (D) est un acide sulfonique, dont la valeur pKs de la première étape de dissociation mesurée à 25 degrés centigrades se situe en-dessous de 1,0.

2. Laques selon la revendication 1, caractérisées en ce que la résine synthétique (B) est une résine de polyacrylate contenant des groupements hydroxyles.

3. Laques selon la revendication 1 ou 2, caractérisées en ce que l'agent de réticulation (C) contient en moyenne statistique au moins deux groupements CH₂ = CH-CO- par molécule.

4. Laques selon l'un quelconque des revendications 1 à 3, caractérisées en ce qu'elles contiennent, outre l'agent de réticulation (C), encore une résine aminoplaste ou un mélange de résines aminoplastes en tant qu'agent de réticulation.

5. Laques selon l'un quelconque des revendications 1 à 4, caractérisées en ce que la valeur pKs de la première étape de dissociation mesurée à 25 degrés centigrades de l'acide sulfonique utilisé en tant que catalyseur (D) se situe en-dessous de -2,0.

6. Laques selon l'un quelconque des revendications 1 à 5, caractérisées en ce qu'elles contiennent en tant que catalyseur (D) de l'acide p-toluènesulfonique.

7. Laques selon l'un quelconque des revendications 1 à 5, caractérisées en ce qu'elles contiennent en tant que catalyseur (D) de l'acide dodécylbenzènesulfonique.

8. Utilisation des laques selon l'une quelconque des revendications 1 à 7 pour laquer des carrosseries d'automobiles.
